# EUROPEAN PATENT APPLICATION

(11) **EP 2 919 178 A1**
(43) Date of publication of application: **16.09.2015**
(21) Application number: 14305359.3
(22) Date of filing: 12.03.2014
(51) Int. Cl.: G06Q 20/42

(54) **System and method of account access notification**

(71) Applicant: ALCATEL LUCENT, 92100 Boulogne-Billancourt (FR)
(72) Inventor: Van Den Broeck, Marc, 2018 Antwerpen (BE); Feki, Mohamed Ali, 2018 Antwerpen (BE); Kawsar, Fahim, 2018 Antwerpen (BE); Vanderhulst, Geert, 2018 Antwerpen (BE); Mathur, Akhil, 560045 Bangalore (IN)
(74) Representative: Grootscholten, Johannes A.M.

(57) **Abstract**

The present disclosure relates to a system and method of account access notification, the system at least comprising: a plurality of account servers, each containing private user for access thereto via a first communication mode and configured to detect access to private user accounts contained therein and to generate and transmit an account access signal in response to detected access. The system further comprises user wearable devices configured to at least receive communications via a second communication mode; and at least one feedback server configured to receive account access signals and to identify at least one of the user wearable devices associated with accessed private user accounts, and transmit a communication comprising an account access notification to the identified user wearable device via the second communication mode. The user wearable devices are configured to generate an alarm to alert the user about access to private user accounts.

## Description

### FIELD

The present disclosure relates to access notifications in response to (attempted) access to a private user account.

### BACKGROUND

Nowadays, all over the internet or when making an electronic payment, users of private accounts need to be able to authenticate themselves to all kinds of websites, web-services or mobile devices, on which their private accounts are accommodated. These websites, web-services or mobile devices are generally designated herein as account servers, which may include additional or alternative examples relative to the aforementioned websites, webservices or mobile devices, and further examples relate in a non-restrictive manner to payment or electronic banking facilities, sites or apps, web-mail account servers, subscription servers, and the like.

Typically users gain access to their private user accounts by means of a userID and a password or using a personal card with pin-code, or any other typical authentication mechanism to be executed exclusively between the account servers accommodating the private user accounts and the users, who own or use these private user accounts.

These forms of authentication are currently considered sufficient to authenticate users to specific account servers. However this type of authentication cannot prevent that an external person or third party can get a hold of a specific userID and associated password and misuse these to authenticate himself to an account server, gain access to a private account and/or for instance withdraw or transfer money from an bank account without the actual owner of the private account being aware of the withdrawal or transfer. In most cases a user is not notified at all when someone is using their identity, or at best the account server is configured to send an e-mail or the like, that there might be a problem that someone has breached their account, and it's in the user's best interest to change their password. However, such messages are commonly mistaken to be phishing mails and subsequently ignored by users.

By way of example, reference is made here to a known system that sends an email to the user who owns a private user account, any time the account is used on a new device. Mailing services have similar emailing systems whenever they suspect malicious entry to a private user account. However, these emails are not always immediately available nor do they trigger the user to accept or reject the account authentication itself, which is being undertaken between an intruder and the account server, when the mail is sent, nor does this feature preclude that a user can mistake the sent e-mail for a phishing mail.

Embodiments of the present disclosure addresses these issues.

### SUMMARY

Embodiments of the present disclosure relate to a system of notifying a user about access to at least one private user account of the user on an account server, the system at least comprising: a plurality of account servers, each containing private user accounts of a plurality of users for access thereto via a first communication mode and configured to detect access to any of the private user accounts contained therein and to generate and transmit an account access signal in response to detected access to said any of the private user accounts. The system further comprises user wearable devices, which are configured to at least receive communications via a second communication mode; and at least one feedback server, which is connected with the plurality of account servers to receive account access signals there from, and is configured to identify at least one of the user wearable devices associated with one of the plurality of users, of whom the private user account has been accessed, and to transmit a communication comprising an account access notification based on received account access signals from the account servers to the identified user wearable device via the second communication mode. The user wearable devices are configured to generate an alarm based on a received account access notification to alert the user associated with the identified user wearable device about access to the private user account.

Essentially, embodiments of the present disclosure target user wearable devices, such as a smart watch, mobile device or other device of which it may be assumed that the rightful owner / user of the private user account will own and practically permanently have on his or her person. Thus the rightful owner / user of any private user account can be informed, independently from the mode of access to the private user account, using the second communication mode about attempted access to the private user account, of which the owner of the user wearable device is known to be the rightful owner / user. Therein, the user wearable devices in the embodiments of the present disclosure can be unique authenticators indicating that a user is who he or she is claiming to be. By seeking a confirmation from the rightful owner / user of the private user account, using the second communication mode, that it is at any given time the rightful owner / user of the private account who is attempting to logon or otherwise gain access to the private user account, a further dimension to an enhanced security is created. It should be noted that because the user wearable devices are assumed to be on the person of the user, even ignoring the alert generated by the user wearable devices can be interpreted as a confirmation that the attempted or executed access can proceed. When private user accounts are more sensitive, such as in the case of baking sites, access can be delayed until after an explicit confirmation from the user in response to the communication from the feedback server and/or the alert from the user wearable device is received back at the feedback server and/or at the account server. It is further pointed out here that the feedback server may operate as an intermediary for several account servers, each associated with different service providers, where the feedback server is preferably as independent as possible from the account servers and allows independent confirmation from the users based on which attempted or executed access can be allowed to proceed.

In a particular embodiment, the system may exhibit the features that the account servers each comprise at least one of the servers from a group comprising: electronic banking servers, payment or subscription servers, e-mail servers, websites, web servers.

In a particular embodiment, the system may exhibit the features that the first communication mode comprises at least one mode from a group, comprising: wireless internet, mobile internet, an app running on a mobile device.

In a particular embodiment, the system may exhibit the features that the user wearable devices each comprise at least one of the apparatuses from a group, comprising a smart watch or smart glasses having network connectivity, a mobile phone, a tablet computer.

In a particular embodiment, the system may exhibit the features that the first and second communication modes are distinct and separate.

In a particular embodiment, the system may exhibit the features that the second communication mode comprises at least one mode from a group, comprising: wireless internet, mobile internet, an app running on a mobile device, SMS, e-mail, message services.

In a particular embodiment, the system may exhibit the features that the user wearable device has a unique ID that can be linked to a specific user wearing it.

In a particular embodiment, the system may exhibit the features that the user wearable device is configured to be linked to all authentication ID's of the user.

By linking a device ID to one o more userID's for one or more services, it has become possible to create a function call feedback to the device/user whenever an authentication with his userID is performed from anywhere. The call feedback will trigger the device to alert the user that someone is using his/her credentials. To do this the system uses a special feedback server. This feedback server will take care of all the communication between the different authentication modules of different account servers, such as web-services, and the user wearable devices of all the users. Thus additional security can be achieved.

In addition it is noted here that the present disclosure not only relates to a system, but also the underlying method, as well as a feedback server and an associated method implemented in or by the feedback server, and an information storage (or carrier) to accommodate a computer program, which enables a computer, when loaded thereon or therein, to execute the steps of a method corresponding to the entire system or to only the functionalities of the feedback server.

### BRIEF DESCRIPTION OF THE FIGURES

Following the above general indications of features of embodiments of the present disclosure, herein below embodiments and aspects thereof are described in more specific terms, referring to the appended drawing. However, the below description relates to exemplary embodiments, and the scope of the present disclosure and of the protection therefore should by no means be interpreted in a restricted manner or to any specific embodiment or features thereof, unless the appended claims and more in particular the appended independent claims thereof specifically limit embodiments to include particular features, whilst even then obvious or logical alternatives for specifically defined features even in the appended independent claims should be considered to be included in the scope of protection for embodiments according to the present disclosure. In the appended drawing:

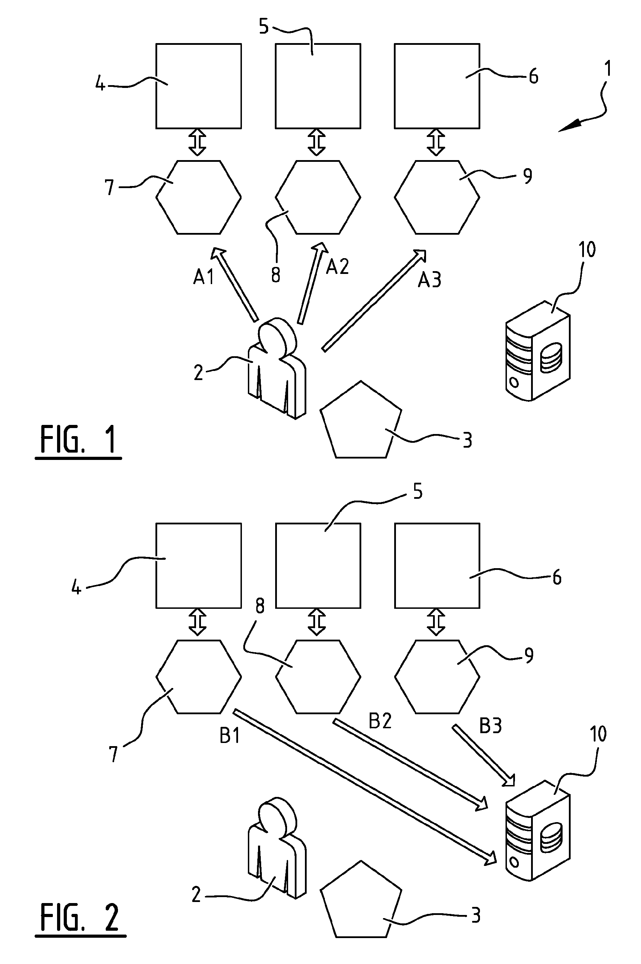

Figures 1 through 6 exhibit schematic representations of subsequent steps in a method according to an embodiment of the present disclosure.

### DESCRIPTION OF EMBODIMENTS

In the exemplary embodiment of a system 1 and method according to the present disclosure according to figures 1 - 6, a user 2 possesses a smart watch 3. As an example, the smart watch has a unique identifier.

The system 1 further comprises a plurality of account servers 4 - 6, of which the account server 4 may be a website with secured access, account server 5 may be a webservice with secured access and account server 6 may be a payment or banking service, also with secured access. Each account server contains private user accounts of a plurality of users 2, of which a single user 2 is shown, as a simplification and for ease of understanding. Further, each account server 4 - 6 is associated with or comprises its own authentication module 7 - 9. The system further comprises a feedback server 10.

Each user 2 can gain access to his or her private account(s) on any one of the account servers 4 - 6 through a corresponding one of the authentication modules 7 - 9 via a first communication mode, indicated with arrows from the user 2 to the authentication modules 7 - 9. Any portion of the account servers 4 - 6 and/or of the authentication modules 7 - 9 may be configured to detect access to any of the private user accounts contained in the account servers 4 - 6. For description of the present embodiment, the authentication modules are considered to form a part of the account servers 4 - 6.In more detail, user 2 will at one time want to gain access to his/her private user account on one of the account servers 4 - 6 through an associated one of the authentication modules 7 - 9. When initially approaching the relevant one of the account servers 4 - 6, the user may employ any one or more than one of any number of communication modes, such as wireless internet, mobile internet, an app running on a mobile device and the like. The initial approach by the user 2 of a relevant one of the account servers is indicated with arrows A1 - A3 in figure 1.

Subsequently, upon detection of attempted access (or later, after preliminary access has been granted, for fields of use, where temporary or preliminary access can't lead to considerable risk or damage) either or both of the account server 4 - 6 and the authentication module 7 - 9, at which the private user account is accommodated, is configured to generate and transmit an account access signal B1 - B3 to the feedback server 10, as shown in Figure 2. In the meantime, conventional authentication through the conventional authentication module may proceed, for example by asking the user to input a password associated with the User ID.

The user 2 may beforehand register his/her user wearable device 3 and/or the unique ID thereof in an account server 4 - 6 as a part of private user account login information, or in an authentication module 7 - 9 or in the feedback server 10. For instance the user may link all his user ID's associated with private user accounts to this smart watch, for example by opening his/her Google account in a web browser. In the settings of his Google account, the unique identifier XYZ of smart watch 3 can be linked with this Google account. This can be done via manually entering the unique ID XYZ into the account settings panel of the Google account, or automated via a Bluetooth connection where the user smart watch 3 pairs with his laptop to exchange the unique ID XYZ, or any other form of message exchange.

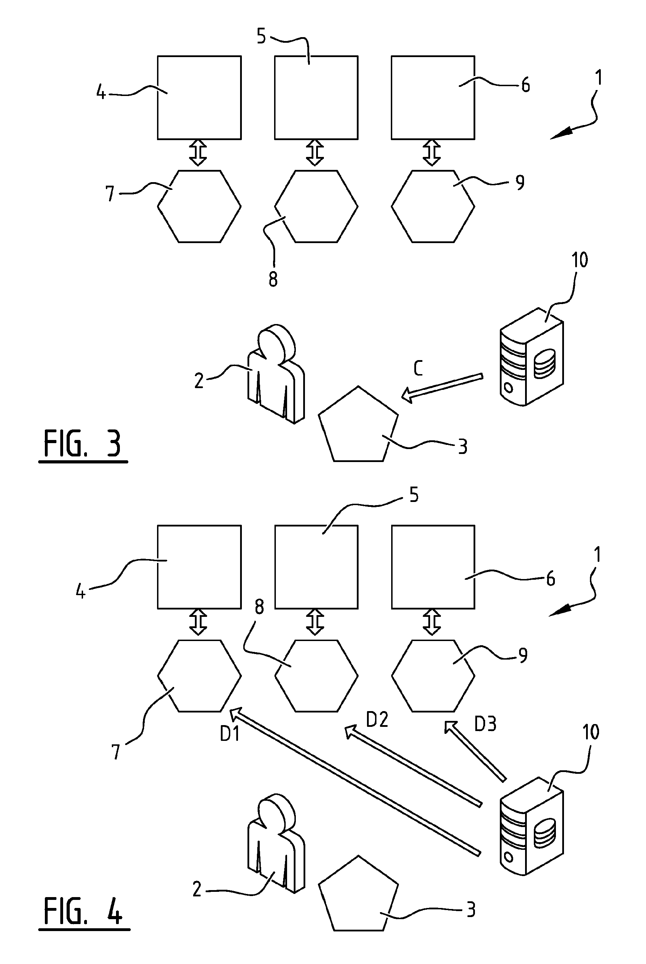

Based on the registered user wearable device, or on the unique ID thereof and potentially also the private user account information, the feedback server 10 is configured to generate and send (Figure 3) a communication C, comprising an account access notification based on received account access signals B from the account servers 4 - 6, to the identified user wearable device 3 via the second communication mode. The second communication mode may comprise wireless internet, mobile internet, an app running on a mobile device, SMS, e-mail, message services, and the like. Preferably the second communication mode is different from the first mode, but this is not essential, and may be determined at least in part by a choice of user wearable devices that any specific user may wish to employ when using the system 1 in the present embodiment of the present disclosure. To enhance the extra security that may be achieved by the present disclosure, the user wearable device should preferably rely on different communication modes, but communications between the user 2 and the account servers 4 - 6 should most preferably (but not exclusively) be entirely independent from communications between the feedback server 10 and the user wearable device 3.

In the above, Google account oriented example, the user 2 will have created a callback function from his Google account to his smart watch 3. Whenever the user 2 logs in to his Google account, the log in mechanism at Google will trigger the feedback server 10 to notify the user wearable devices 3 associated with the user's 2 account.

In response to the communication C in Figure 3, the user wearable device 3 may start to vibrate, or flicker a light, or turn on and off the display backlighting or present any other appropriate form of alarm based on a received account access notification C to alert the user 2 associated with the identified user wearable device 3 about access to the private user account. Additionally or alternatively, the screen of the user wearable device 3, such as a smart watch, may be controlled to show a logo of the account type, to which access is being obtained, to let the user 2 know that someone just made an authentication with his Google account. The feedback server is thus configured to provide users of several private user accounts or types thereof with alerts regardless of the type of account server notifies the feedback server of an attempted or executed logon / access.

Whenever the user wearable device 3 is triggered to generate an alert for the user through the above described process, which can be referred to as a feedback function, one or more than one of a plurality of scenario's may thereafter develop.

If the user, who is attempting to access a private user account, is the owner of the private user account, to which access is attempted, the alert - tactile, auditory, visual or otherwise - will come as no surprise. The system may in that situation accept a time out of for example some seconds or longer as an indication that the access is not to be denied or terminated.

Alternatively, the system 1 may require that the user 2 furnishes an explicit denial or approval to grant access. Such explicit denial or approval then forms an additional safety feature to prevent access even if the unauthorized user attempting to gain access to the private user account is not authorized but has the UserID and password necessary to gain said access to another user's private user account. In case a specific denial or approval is needed, the system may allow the conventional login procedure to proceed, and terminate a session after a successfully completed logon after receiving a denial via the wearable user device, in particular if the risk of harmful tampering with the private user account is limited in the short time that access was available to the unauthorized user.

In both instances, the feedback server can relay the omission of a response, or the explicit denial or approval from the user wearable device 3 to a relevant one of the account servers 4 - 6, as indicated with arrows D1 - D3 in figure 4. Alternatively, the feedback server may send the response, denial or approval to all account servers 4 - 6, as indicated by all arrows D1 - D3.

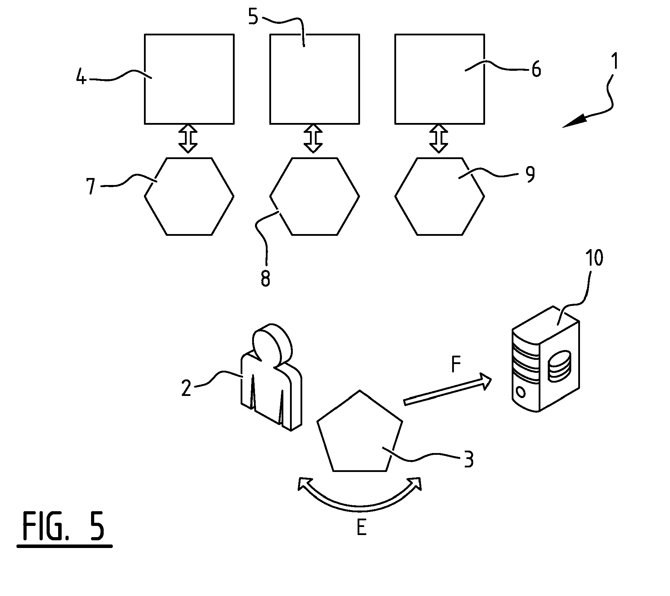

In the afore mentioned case of a user 2 with a Google account on one of the account servers 4 - 6 and a smart watch 3, the user 2 after having used his Google ID to authenticate himself to the Google services, does not necessarily have to respond to vibration of the smart watch. If the person login on to the account server is not authorized to do so, the tactile, auditory or visual feedback warns the owner / user that someone is using the accessed account to authenticate to the Google services. In case of a smart watch, the user 2 may then perform a gesture with the arm on which the smart watch is fastened, for instance in a swipe/ throw away gesture as indicated with arrow E in figure 5. Thereby the smart watch 3 will be controlled to notify (arrow F) the authentication module 7, 8 or 9 via the feedback server 10, that this login is in fact not permitted. In this case the login will fail or a session can be terminated, when the user 2 makes this swipe gesture within a period of (for example) 2 seconds. The user's gesture may result in a http request to the Google services to immediately log off any sessions by anyone other than the authorized user 2, who has the user wearable device (Figure 5).

Above the example of a smart watch for a user wearable device is employed. It is noted that such a smart watch or any other form of a user wearable device may exhibit a requirement of a user to identify himself or herself to the device, before the device will accept commands in response to alerts. For example, such identification can be automatic. It is possible to have the user wearable device monitor a heartbeat to identify the user wearing or carrying the device. Every person has a detectable and unique heartbeat pattern, based on which it is possible to identify the person carrying or wearing the device. Alternatively, the user may be required to enter a code, such as a pin code, to gain access to the functionalities of the device. As long as the same user carries or wears the device, the device may be configured to accept commands, even in the form of gestures and the like, from the user wearing or carrying the device. The device may monitor that the same user is wearing or carrying the device after initial identification, or intermittently ascertain that the same user is wearing or carrying the device. Also if a user is required to enter a code, such as a pin code, the device may be configured to accept commands from the user, as long as a buckle, clasp, bracelet or other release mechanism is not opened or unlocked, allowing another user to wear the device and after which the device should no longer accept commends from the user wearing or carrying the device without authorization to do so. In particular, the user wearable device should become inoperable as soon as - after initial identification - the device is removed from or rendered suitable to be removed from the person of the user who is initially identified to the device as the authorized user. Any user wearable device may be configured to announce to the feedback server its activation, immediately after an authorized user has arranged the user wearable device on his or her person, or after initial identification and/or authorization that this user is authorized to use the user wearable device. Also, when the user wearable device enters an inoperable state, it may announce the transition to the feedback server. The feedback server may register whether any user wearable device is operable or inoperable, to avoid having to send an account access notification to the user wearable device, if the user's device is inoperable. Alternatively and/or additionally, the user wearable device may be configured to, in the inoperative or inoperable state thereof, return a default refusal or denial in response to any received account access notification. In a further embodiment, when the user wearable device may be configured to monitor battery power and, when a low power on the battery is detected thereby, the user wearable device may send a status inactive to the feedback server, so that in the event that the wearable becomes disconnected or goed offline, because of battery outage, no authentication can be performed to connect even the authorized users to the account servers.

Based upon the above description and the appended claims it will be immediately evident, that additional and alternative embodiments are possible, within the scope of the present disclosure, and of the scope of protection according to the appended claims. For instance, in an embodiment the authentication can also be linked to credit/debit/bank cards. Whenever a user or an unauthorized user tries to pay using the bank cards (or a copy of your bankcard) of an owner / user, the owner/user will receive a tactile, auditory or visual alert/feedback and can accept (by doing nothing) or refuse the transaction by making a quick gesture in which case the payment transaction will not be allowed. Other, more explicit acceptance of attempted access than omission of a response can also be contemplated, as well as allowing preliminary access without essential permissions, like bank transfers, as long as explicit acceptance is not received, to avoid owners/user from experiencing excessive delays.

In another embodiment the user could request not to be logged off from his current session when someone else at another location tries to use his credentials. For example the owner/user may be working at home on his laptop. He has authenticated himself half an hour ago at his/her private user account and he is working on or in the private account environment, e.g. reading his/her G+. Suddenly the user 2 is notified through his/her watch that someone just authenticated using the same UserID and password. The user may understand the notification because his watch vibrated (or generated another alert) and the wearable user device may show a logo of the private user account service (a Google logo or the like) on the display. The user 2 can then make a swiping gesture (arrow Eto cancel the authentication. Normally this could result in all sessions of the particular user to be logged off. On the other hand, if the user wearable device was paired via Bluetooth with the user's laptop, the IP of his laptop is stored in the system (the account server 4 - 6 and/or the authentication module 7 - 9). Whenever the user wearable device 3 triggers a request/instruction for logoff, the IP address of the trusted devices will be sent along with the request so that the authentication module 7 - 9 of the calling service, knows that it should destroy all sessions for this account except for those sessions belonging to a certain IP('s) (trusted IP).

## Claims

1. A system of notifying a user about access to at least one private user account of the user on an account server, the system at least comprising:
- a plurality of account servers, each containing private user accounts of a plurality of users for access thereto via a first communication mode and configured to detect access to any of the private user accounts contained therein and to generate and transmit an account access signal in response to detected access to said any of the private user accounts;
**CHARACTERISED BY**
- user wearable devices, which are configured to at least receive communications via a second communication mode; and
- at least one feedback server, which is connected with the plurality of account servers to receive account access signals there from, and is configured to identify at least one of the user wearable devices associated with one of the plurality of users, of whom the private user account has been accessed, and to transmit a communication comprising an account access notification based on received account access signals from the account servers to the identified user wearable device via the second communication mode,
wherein the user wearable devices are configured to generate an alarm based on a received account access notification to alert the user associated with the identified user wearable device about access to the private user account.

2. The system of claim 1, wherein the account servers each comprise at least one of the servers from a group comprising: electronic banking servers, payment or subscription servers, e-mail servers, websites, web servers.

3. The system of claim 1 or 2, wherein the first communication mode comprises at least one mode from a group, comprising: wireless internet, mobile internet, an app running on a mobile device.

4. The system of claim 1, 2 or 3, wherein the user wearable devices each comprise at least one of the apparatuses from a group, comprising a smart watch or smart glasses having network connectivity, a mobile phone, a tablet computer.

5. The system of any of the preceding claims, wherein the first and second communication modes are distinct and separate.

6. The system of any of the preceding claims, wherein second communication mode comprises at least one mode from a group, comprising: wireless internet, mobile internet, an app running on a mobile device, SMS, e-mail, message services.

7. The system of any of the preceding claims, wherein the user wearable device has a unique ID that can be linked to a specific user wearing it.

8. The system of any of the preceding claims, wherein the user wearable device is configured to be linked to all authentication ID's of the user.

9. A feedback server of a system of notifying a user about access to at least one private user account of the user on an account server, the system at least comprising a plurality of account servers, each containing private user accounts of a plurality of users for access thereto via a first communication mode and configured to detect access to any of the private user accounts contained therein and to generate and transmit an account access signal in response to detected access to said any of the private user accounts; user wearable devices, which are configured to at least receive communications via a second communication mode; and at least one feedback server, wherein the feedback server is connected with the plurality of account servers to receive account access signals there from, and is configured to identify at least one of the user wearable devices associated with one of the plurality of users, of whom the private user account has been accessed, and to transmit a communication comprising an account access notification based on received account access signals from the account servers to the identified user wearable device via the second communication mode.

10. A method of notifying a user about access to at least one private user account of the user on an account server, the method at least comprising:
- at a plurality of account servers, each containing private user accounts of a plurality of users for access thereto via a first communication mode, detecting access to any of the private user accounts contained therein; and
- generating and transmitting an account access signal in response to detected access to said any of the private user accounts;
**CHARACTERISED BY**
- at user wearable devices, at least receiving communications via a second communication mode;
- at at least one feedback server connected with the plurality of account servers, receiving account access signals there from,
- identifying at least one of the user wearable devices associated with one of the plurality of users, of whom the private user account has been accessed;
- transmitting a communication comprising an account access notification based on received account access signals from the account servers to the identified user wearable device via the second communication mode,
- at the user wearable devices, generating an alarm based on a received account access notification and thereby alerting the user associated with the identified user wearable device about access to the private user account.

11. A method of notifying a user about access to at least one private user account of the user on an account server, wherein a plurality of account servers, each containing private user accounts of a plurality of users for access thereto via a first communication mode, detect access to any of the private user accounts contained therein and generate and transmit an account access signal in response to detected access to said any of the private user accounts, and user wearable devices receive communications via a second communication mode; wherein the method comprises:
- at at least one feedback server connected with the plurality of account servers, receiving account access signals there from,
- identifying at least one of the user wearable devices associated with one of the plurality of users, of whom the private user account has been accessed;
- transmitting a communication comprising an account access notification based on received account access signals from the account servers to the identified user wearable device via the second communication mode to enable the user wearable devices to generate an alarm based on a received account access notification and thereby alert the user associated with the identified user wearable device about access to the private user account.

12. An information storage on or in which is stored a software program which, when loaded into a computer, enables the computer to execute the method of any of claims 10 and 11.

## Amended claims

### Amended claims in accordance with Rule 137(2) EPC.

1. A system of notifying a user about access to at least one private user account of the user on an account server, the system at least comprising:
- a plurality of account servers, each containing private user accounts of a plurality of users for access thereto via a first communication mode and configured to detect access to any of the private user accounts contained therein and to generate and transmit an account access signal in response to detected access to said any of the private user accounts;
- user wearable devices, which are configured to at least receive communications via a second communication mode; and
- at least one feedback server, which is configured to receive account access signals there from and to identify at least one of the user wearable devices associated with one of the plurality of users, of whom the private user account has been accessed, and to transmit a communication comprising an account access notification based on received account access signals from the account servers to the identified user wearable device via the second communication mode,
- wherein the user wearable devices are configured to generate an alarm based on a received account access notification to alert the user associated with the identified user wearable device about access to the private user account
**CHARACTERISED IN THAT**
- the at least one feedback server is independent from the plurality of account servers and is connected with the plurality of account servers to receive account access signals from the plurality of account servers.

2. The system of claim 1, wherein the account servers each comprise at least one of the servers from a group comprising: electronic banking servers, payment or subscription servers, e-mail servers, websites, web servers.

3. The system of claim 1 or 2, wherein the first communication mode comprises at least one mode from a group, comprising: wireless internet, mobile internet, an app running on a mobile device.

4. The system of claim 1, 2 or 3, wherein the user wearable devices each comprise at least one of the apparatuses from a group, comprising a smart watch or smart glasses having network connectivity, a mobile phone, a tablet computer.

5. The system of any of the preceding claims, wherein the first and second communication modes are distinct and separate.

6. The system of any of the preceding claims, wherein second communication mode comprises at least one mode from a group, comprising: wireless internet, mobile internet, an app running on a mobile device, SMS, e-mail, message services.

7. The system of any of the preceding claims, wherein the user wearable device has a unique ID that can be linked to a specific user wearing it.

8. The system of any of the preceding claims, wherein the user wearable device is configured to be linked to all authentication ID's of the user.

9. A feedback server of a system of notifying a user about access to at least one private user account of the user on an account server, the system at least comprising a plurality of account servers, each containing private user accounts of a plurality of users for access thereto via a first communication mode and configured to detect access to any of the private user accounts contained therein and to generate and transmit an account access signal in response to detected access to said any of the private user accounts; user wearable devices, which are configured to at least receive communications via a second communication mode; and at least one feedback server, wherein the feedback server is configured to receive account access signals there from, and to identify at least one of the user wearable devices associated with one of the plurality of users, of whom the private user account has been accessed, and to transmit a communication comprising an account access notification based on received account access signals from the account servers to the identified user wearable device via the second communication mode
**CHARACTERISED IN THAT**
- the feedback server is independent from the plurality of account servers and is connected with the plurality of account servers to receive account access signals from the plurality of account servers.

10. A method of notifying a user about access to at least one private user account of the user on an account server, the method at least comprising:
- at a plurality of account servers, each containing private user accounts of a plurality of users for access thereto via a first communication mode, detecting access to any of the private user accounts contained therein; and
- generating and transmitting an account access signal in response to detected access to said any of the private user accounts;
**CHARACTERISED BY**
- at user wearable devices, at least receiving communications via a second communication mode;
- at at least one feedback server connected with the plurality of account servers, receiving account access signals there from,
- identifying at least one of the user wearable devices associated with one of the plurality of users, of whom the private user account has been accessed;
- transmitting a communication comprising an account access notification based on received account access signals from the account servers to the identified user wearable device via the second communication mode,
- at the user wearable devices, generating an alarm based on a received account access notification and thereby alerting the user associated with the identified user wearable device about access to the private user account.

11. A method of notifying a user about access to at least one private user account of the user on an account server, wherein a plurality of account servers, each containing private user accounts of a plurality of users for access thereto via a first communication mode, detect access to any of the private user accounts contained therein and generate and transmit an account access signal in response to detected access to said any of the private user accounts, and user wearable devices receive communications via a second communication mode; wherein the method comprises:
- at at least one feedback server connected with the plurality of account servers, receiving account access signals there from,
- identifying at least one of the user wearable devices associated with one of the plurality of users, of whom the private user account has been accessed;
- transmitting a communication comprising an account access notification based on received account access signals from the account servers to the identified user wearable device via the second communication mode to enable the user wearable devices to generate an alarm based on a received account access notification and thereby alert the user associated with the identified user wearable device about access to the private user account.

12. An information storage on or in which is stored a software program which, when loaded into a computer, enables the computer to execute the method of any of claims 10 and 11.
